# NOUVEAU FASCICULE DE BREVET EUROPEEN

(11) **EP 2 694 309 B2**
(45) Date de publication et mention de la décision concernant l'opposition: **04.05.2022**
(45) Mention de la délivrance du brevet: 06.09.2017
(21) Numéro de dépôt: 12717407.6
(22) Date de dépôt: 29.03.2012
(51) Int. Cl.: B60K 6/48, B60K 6/547, F16H 3/02, B60W 20/10, B60W 10/06, B60W 10/08, B60W 10/113

(54) **TRANSMISSION HYBRIDE POUR VEHICULE AUTOMOBILE ET PROCEDE DE COMMANDE**
HYBRIDGETRIEBE FÜR EIN KRAFTFAHRZEUG UND STEUERVERFAHREN
HYBRID TRANSMISSION FOR A MOTOR VEHICLE, AND CONTROL METHOD

(30) Priorité: 01.04.2011 FR 1152805
(43) Date de publication de la demande: 12.02.2014
(73) Titulaire: Renault s.a.s, 92100 Boulogne Billancourt (FR)
(72) Inventeur: FREMAU, Nicolas, 78470 Saint-Rémy-lès-Chevreuse (FR); VIGNON, Antoine, 91430 Igny (FR); RANDI, Sid-Ali, 73000 Chambéry (FR); KETFI-CHERIF, Ahmed, 78990 Élancourt (FR)
(74) Mandataire: Novagraaf Technologies
(86) Numéro de dépôt international: PCT/FR2012/050661
(87) Numéro de publication internationale: WO 2012/131259

(56) Documents cités:
- EP-A1- 2 281 727
- EP-A2- 1 013 494
- WO-A1-2009/109821
- WO-A1-2010/070707
- WO-A1-2012/000705
- DE-A1-102006 003 725
- FR-A1- 2 811 395

## Description

La présente invention se rapporte au domaine des transmissions hybrides pour véhicules automobiles comportant d'une part un moteur thermique d'entraînement et d'autre part une machine électrique.

Plus précisément, elle a pour objet une transmission hybride pour véhicule automobile muni d'un moteur thermique et d'une machine électrique d'entraînement, comportant deux arbres primaires concentriques portant chacun au moins un pignon de descente sur un arbre secondaire relié aux roues du véhicule.

Les transmissions hybrides ont pour intérêt principal de faire bénéficier la chaîne cinématique d'entraînement d'un véhicule, de deux sources d'énergies, thermique et électrique, dont les apports de couple peuvent se cumuler dans un mode dit hybride, ou être utilisées séparément, soit dans un « mode thermique pur » où la machine électrique ne fournit pas de couple à la chaîne de traction, soit dans un mode « électrique pur », où le moteur thermique ne fournit pas de couple à la chaîne de traction. D'autres fonctionnalités sont également requises, telles que la possibilité de lancer le moteur thermique à l'arrêt ou en roulage, en utilisant la machine électrique comme démarreur, ou celle d'utiliser la machine électrique en générateur de courant, pour charger les batteries.

Dans sa conception la plus simple, une transmission hybride telle que présentée ci-dessus assure l'ensemble des fonctions requises sur un seul rapport de démultiplication, c'est-à-dire sans la possibilité de bénéficier de plusieurs vitesses de marche avant, comme sur une transmission classique.

Par la publication US 5 433 282, on connaît une transmission hybride pour véhicule automobile composée essentiellement d'un train épicycloïdal simple, dont les trois sorties, porte satellite, planétaire et couronne, sont reliées au moteur thermique, à la machine électrique et aux roues du véhicule. Le moteur thermique, la machine électrique et le train sont coaxiaux. Une roue libre est disposée entre le moteur thermique et le planétaire du train. Elle permet notamment de combiner l'apport de la machine électrique et du moteur thermique pour l'entraînement du véhicule, et de disposer de deux rapports de transmission. Cependant, ses possibilités d'adaptation à des modes de roulage spécifiques, tels qu'un roulage typiquement urbain et un roulage typiquement routier en mode électrique pur à vitesses modérées, et un roulage typiquement autoroutier à vitesse élevée, par exemple en mode thermique pur, sont limitées.

La publication EP 2 281 727 A1 divulgue une transmission hybride pour véhicule automobile muni d'un moteur thermique et d'une machine électrique d'entraînement, comportant deux arbres primaires concentriques portant chacun au moins un pignon de descente sur un arbre secondaire relié aux roues du véhicule, la transmission présentant un premier moyen de couplage entre les deux arbres primaires pouvant occuper au moins trois positions dans lesquelles : -le moteur thermique est découplé de la chaîne cinématique reliant la machine électrique aux roues, -le moteur thermique entraîne les roues avec ou sans l'appoint de la machine électrique, et -le moteur thermique et la machine électrique sont couplés de manière à additionner en direction des roues, leurs couples respectifs. La présente invention vise à disposer d'une transmission hybride disposant d'au moins deux rapports distincts en mode électrique et hybride et d'un rapport supérieur, dédié au roulage rapide en mode thermique.

Dans ce but, elle prévoit une transmission selon la revendication 1.

Selon un mode de réalisation particulier, cette transmission présente deux pignons de descente d'un arbre primaire creux sur des pignons fous d'un arbre secondaire, et un deuxième moyen de couplage de l'un ou l'autre des ces deux pignons fous, sur ce même arbre secondaire.

De préférence, on utilise la machine électrique comme seule source d'énergie motrice jusqu'à un seuil de vitesse, à partir duquel on couple le moteur thermique aux roues.

D'autres caractéristiques et avantages de l'invention apparaîtront clairement à la lecture de la description suivante d'un mode de réalisation non limitatif de celle-ci, en se reportant aux dessins annexés, sur desquels :

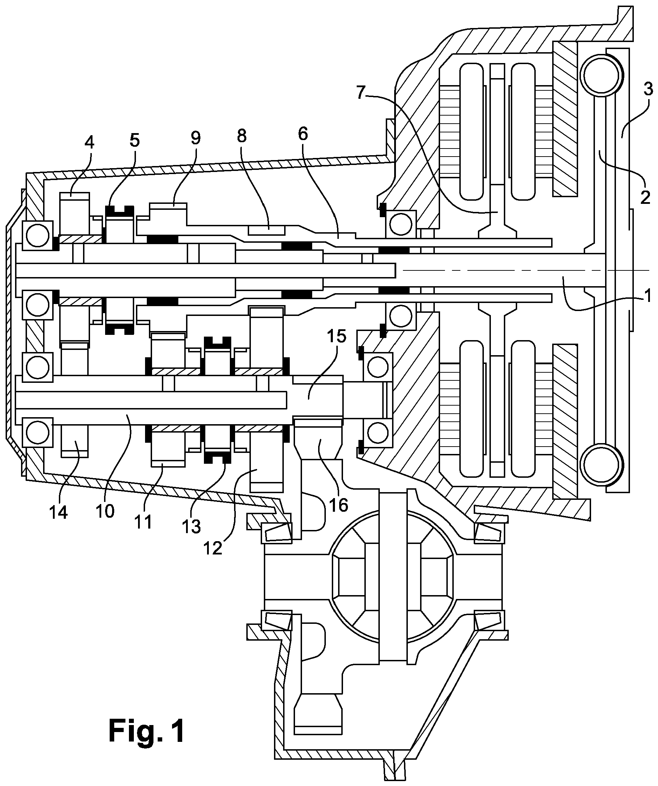

- la figure 1 est un schéma d'architecture de la transmission proposée,
- la figure 2 illustre le démarrage et le roulage en mode électrique sur le rapport court,
- la figure 3 illustre le roulage en mode électrique sur un rapport intermédiaire,
- la figure 4 illustre le roulage en mode thermique sur le rapport long,
- la figure 5 illustre le roulage en mode hybride sur le rapport court,
- la figure 6 illustre le roulage en mode hybride sur le rapport intermédiaire,
- la figure 7 illustre l'utilisation du moteur thermique en mode hybride sur le rapport long avec intervention de la machine électrique sur le rapport intermédiaire,
- la figure 8 illustre la régénération des batteries du véhicule au point mort, et
- la figure 9 illustre une utilisation avantageuse de la transmission.

La transmission illustrée par les figures comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7, de préférence (mais non obligatoirement) de type machine type axial discoïde. D'autres types de machine électrique sont également utilisables dans le cadre de l'invention, par exemple des machines radiales, à aimant ou à bobine d'excitation, ou des machines à réluctance. L'arbre creux 6 porte deux pignons fixes 8, 9. L'arbre creux 6 peut être relié à l'arbre primaire plein 1 par intermédiaire du système de couplage 5. Un arbre secondaire 10 porte deux pignons fous 11 et 12. On peut relier les pignons fous 11, 12 à l'arbre primaire par l'intermédiaire d'un deuxième système de couplage 13 (crabot, synchroniseur, ou autre type de coupleur progressif ou non). L'arbre secondaire 10 porte également un pignon fixe 14 et un pignon de descente 15 vers un différentiel 16 relié aux roues (non représentées) du véhicule.

Le premier moyen de couplage 5 peut occuper au moins trois positions dans lesquelles :
- le moteur thermique est découplé de la chaîne cinématique reliant la machine électrique 7 aux roues (position 1),
- le moteur thermique entraîne les roues avec ou sans l'appoint de la machine électrique (position 2), et
- le moteur thermique et la machine électrique 7 sont couplés de manière à additionner en direction des roues leurs couples respectifs (position 3).

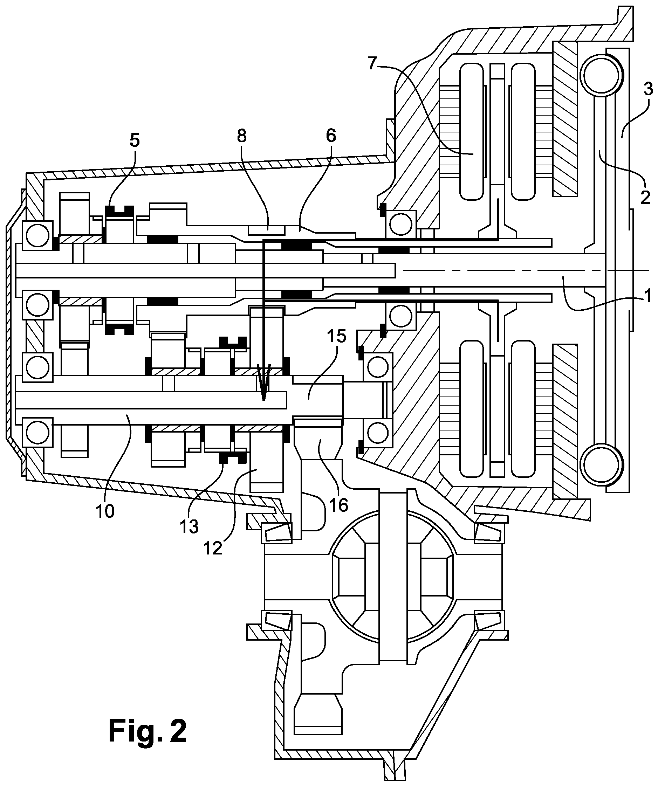

Sur la figure 2, le premier système de couplage 5 est ouvert (position 1), tandis que le deuxième système de couplage 13 est fermé de manière à solidariser le pignon fou du rapport court 12 avec l'arbre secondaire 10. La transmission est en mode électrique sur le rapport court, ou premier rapport de marche avant. Le couple fourni par la machine électrique à l'arbre primaire creux 6 descend par le premier pignon fixe 8 sur le pignon fou 12. Le système de couplage 13 lie en rotation le pignon 12 et l'arbre 10. Le couple descend de la ligne secondaire sur le différentiel 16 par le pignon 15.

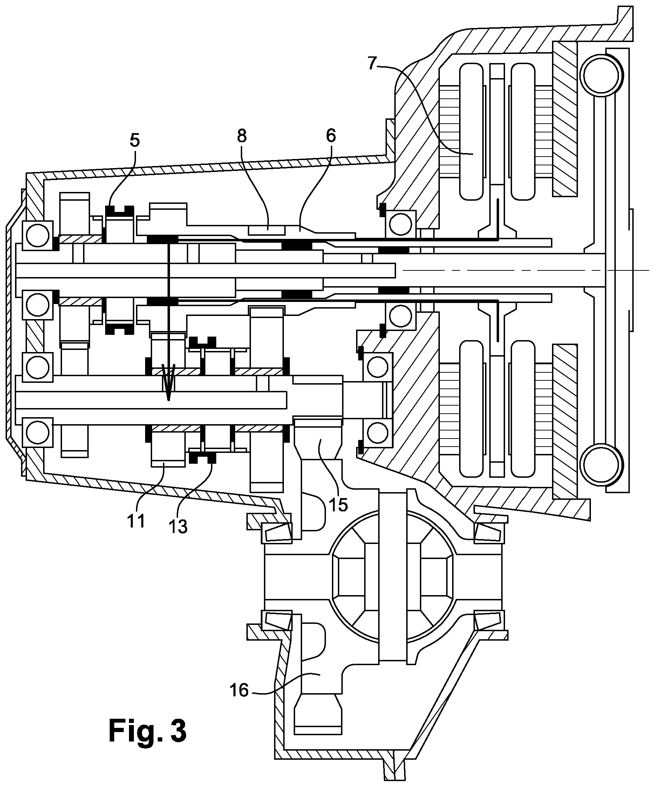

Sur la figure 3, le premier système de couplage 5 est toujours ouvert (position 1), tandis que le deuxième système de couplage 13 est fermé, de manière à solidariser le pignon fou du rapport intermédiaire 11 avec l'arbre secondaire 10. La transmission est en mode électrique sur le rapport intermédiaire, ou deuxième rapport de marche avant. Le couple fourni par la machine électrique 7 à l'arbre primaire creux 6, descend par le deuxième pignon fixe 9 sur le pignon fou 114. Le système de couplage 13 lie en rotation le pignon 11 et l'arbre 10. Le couple descend de la ligne secondaire sur le différentiel 16 par le pignon 15.

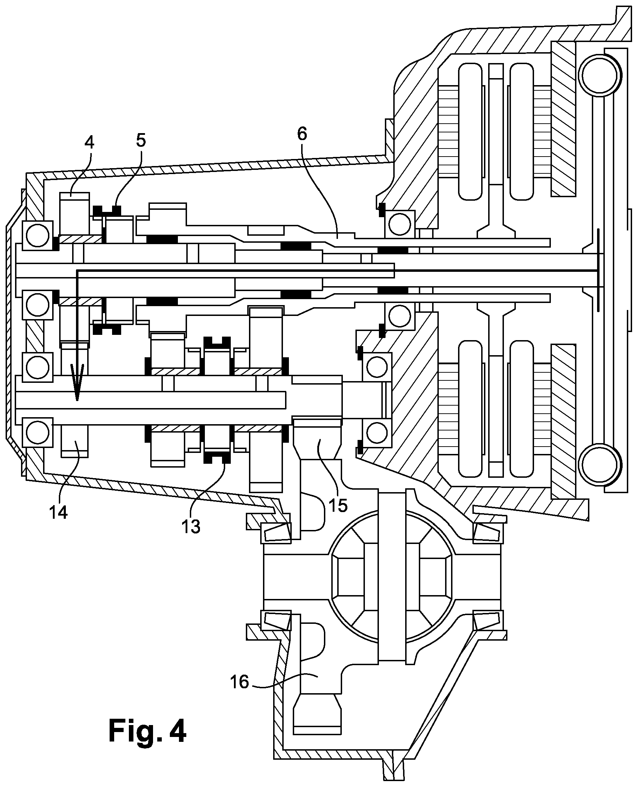

Sur la figure 4, le premier système de couplage 5 est fermé en position 2, de manière à rendre solidaire le pignon fou 4 porté par l'arbre plein 1, avec celui-ci, tandis que le deuxième moyen de couplage 13 est ouvert. La transmission est sur le rapport de rapport long, ou de troisième. La machine électrique ne fournit pas de couple. Le couple fourni par le moteur thermique descend sur l'arbre secondaire 10 par le pignon 4 et le pignon fixe 14 de l'arbre secondaire 10. Comme précédemment, le couple descend de la ligne secondaire sur le différentiel 16 par le pignon 15.

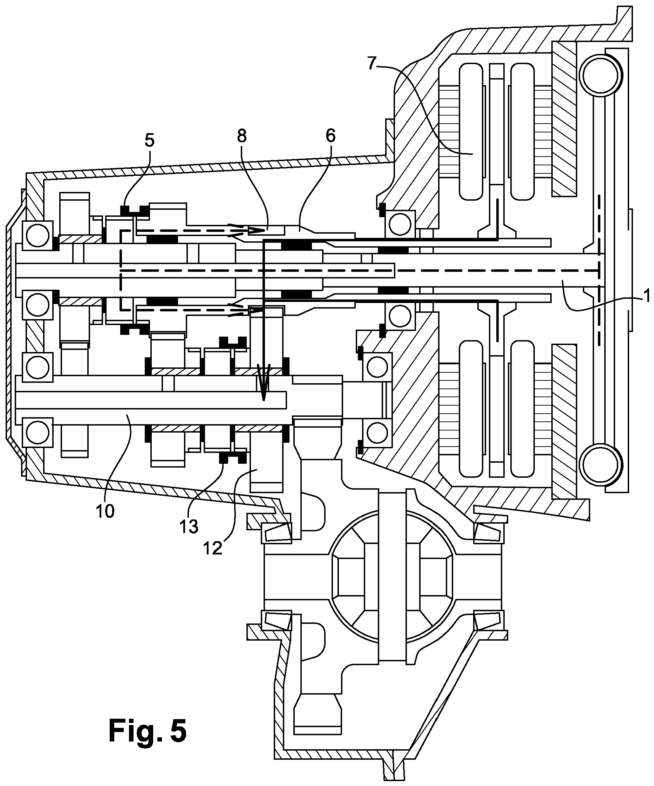

Sur la figure 5, le premier moyen de couplage 5 est fermé en position 3, de manière à rendre solidaire l'arbre plein 1, de l'arbre creux 6. Le deuxième système de couplage 13 est fermé, de manière à rendre solidaire le pignon fou du rapport court 12 et l'arbre secondaire 10. La transmission est en mode hybride sur le rapport court. Les apports du moteur thermique et de la machine électrique sur la chaîne de traction se cumulent. Ils sont transmis de l'arbre primaire creux 6 sur l'arbre secondaire par la descente de pignons 8, 12.

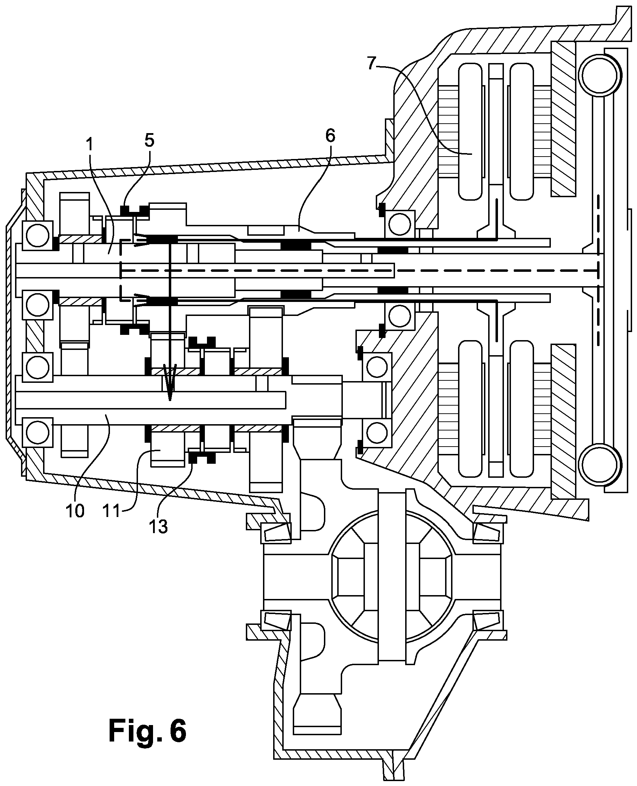

Sur la figure 6, le premier moyen de couplage 5 toujours fermé, en position 3, comme sur la figure 5. L'arbre primaire plein 1, est donc solidaire de l'arbre primaire creux 6. Le deuxième système de couplage 13 est également fermé : le pignon fou 11 du rapport intermédiaire est solidaire de l'arbre secondaire 10. La transmission est en mode hybride sur le rapport intermédiaire. Les apports du moteur thermique et de la machine électrique sur la chaîne de traction se cumulent.

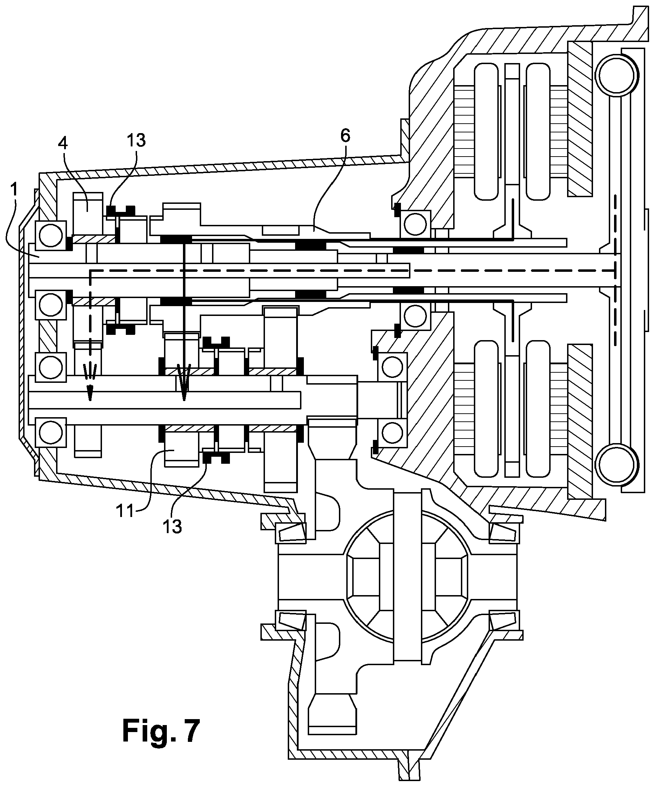

Sur la figure 7, le premier système de couplage 5 est fermé en position 2 : il rend solidaire le pignon fou 4 porté par l'arbre primaire plein 1, avec celui-ci. Par ailleurs, le deuxième moyen de couplage 13 est fermé de manière à rendre solidaire le pignon fou 11 de rapport intermédiaire avec l'arbre secondaire 10. La transmission est en mode hybride sur le rapport long, avec cumul des apports du moteur thermique et de la machine électrique.

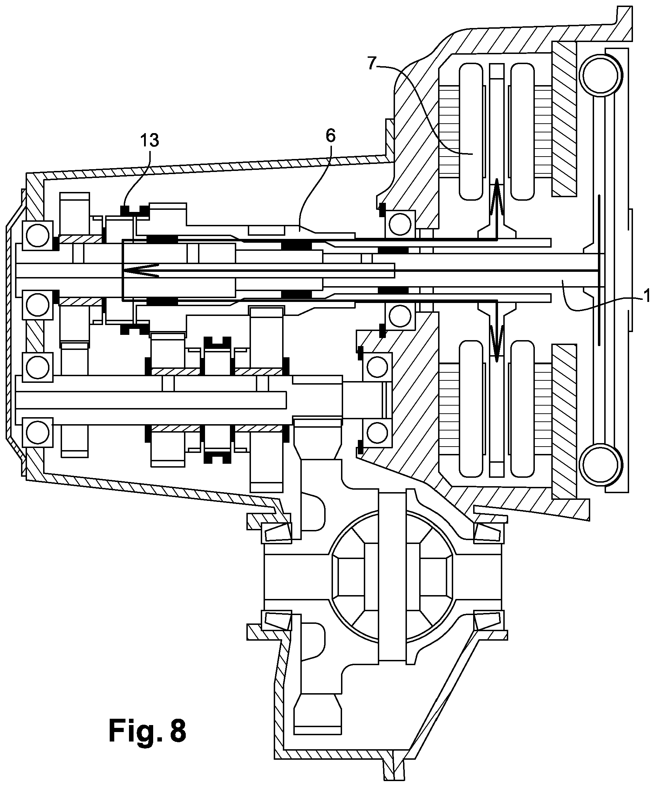

Sur la figure 8, le premier système de couplage est en position 3, comme sur que sur les figures 5 et 6, c'est à dire qu'il lie en rotation l'arbre primaire plein 1 et l'arbre primaire creux 6. Le deuxième système de couplage 13 est ouvert. La transmission est donc au « point mort ». Le moteur thermique tournant peut entraîner la machine électrique fonctionnant alors en générateur pour recharger les batteries (non représentées) du véhicule.

Les trois positions du premier moyen de couplage 5 et l'intervention combinée du deuxième moyen de couplage 13 assurent à la transmission au moins les modes suivants :
- un mode électrique sur deux rapports (rapport court et rapport intermédiaire) en position 1 (cf. figures 2, 3),
- un mode thermique sur un rapport (rapport long) en position 2 (cf. figure 4),
- des modes hybrides avec addition des couples dans sur le rapport court et sur le rapport intermédiaire, en position 3 (cf. figures 5 et 6),
- un mode hybride sur le rapport long en position 2 (cf. figure 7), et
- un mode de régénération des batteries au point mort en positon 3 (cf. figure 8)

En résumé, la transmission dispose de trois rapports, et des modes suivants : un mode électrique sur deux rapports, un mode thermique sur un rapport, un mode hybride sur trois rapports et un mode de régénération au point mort.

Les passages de vitesses peuvent s'effectuer de la façon suivante entre le deuxième rapport en mode électrique et le troisième rapport en mode thermique :
- le moteur thermique est porté à son régime de synchronisation sans être lié à la chaîne cinématique (position 1),
- le moteur thermique est couplé à la chaîne cinématique (passage du premier moyen de couplage en (position 2), et
- la machine électrique est coupée, et le deuxième moyen de couplage est ouvert.

Entre le deuxième rapport en mode hybride sur le troisième rapport en mode thermique, le passage peut d'effectuer par :
- coupure du moteur thermique,
- découplage du moteur thermique (passage du premier moyen de couplage de la position 3 à la position 1),
- synchronisation du moteur thermique découplé sur le troisième rapport,
- couplage du moteur thermique (passage du premier moyen de couplage de la position 1 à la position 2),
- coupure de la machine électrique, et
- ouverture du deuxième moyen de couplage.

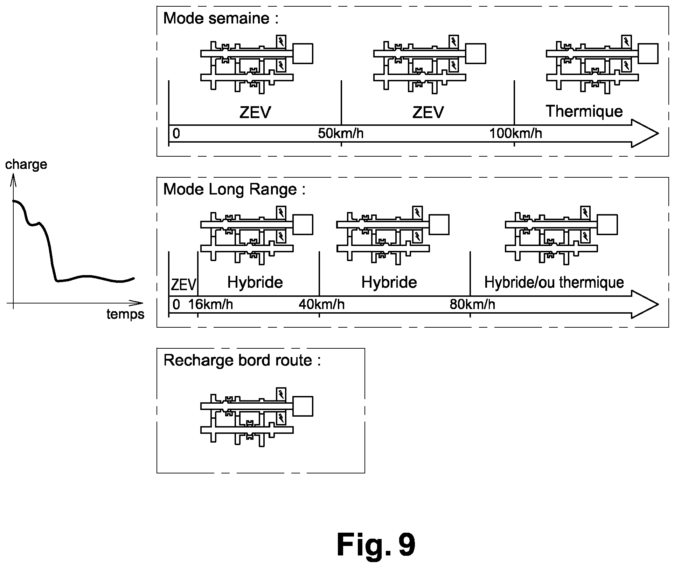

La figure 9 illustre une utilisation particulièrement avantageuse, mais non limitative, de la transmission proposée. Dans cet exemple l'utilisateur dispose d'un fonctionnement dit « semaine », qui maximise l'utilisation purement électrique : le premier rapport électrique est activé pour rouler en ville, jusqu'à environ 50 km/h, vitesses à laquelle le second rapport électrique, correspondant au roulage sur route est passé. Quand la puissance demandée devient importante (par exemple à plus de 90 km/h), le moteur thermique est démarré et prend le relais avec ou sans complément de la machine électrique.

Quand la charge batterie devient faible, ou sur requête de l'utilisateur, le système peut basculer dans un état de fonctionnement dit de « de prolongation d'autonomie » ou « long range ». Dans ce mode, après un décollage électrique, on connecte le moteur thermique dès que la vitesse le permet (à 1500 tour par minute, par exemple à 16 Km/h). Les deux premiers rapports deviennent alors hybrides, et la machine électrique est utilisée essentiellement en régénération. Ces deux modes hybrides « ville » et « route », sont complétés par une utilisation du moteur thermique sur autoroute. Les changements de rapport sont plus faibles, de façon à minimiser le bruit du moteur thermique lié au fort régime de rotation (passage à 3600 tour/minute par exemple). Enfin le mode "rechargement bord de route" peut être activé en cas de stationnement prolongé du véhicule pour recharger la batterie.

En conclusion, la transmission proposée offre de multiples possibilités de fonctionnement. On peut en particulier tirer parti des trois rapports en utilisant la machine électrique comme seule source d'énergie motrice sur un rapport court, adapté à la conduite en ville et un rapport intermédiaire, adapté à la conduite sur route. Au-delà d'un seuil, on peut passer sur le rapport long adapté à la conduite sur autoroute, où le moteur thermique est couplé aux roues (mode thermique). La machine électrique peut être utilisée comme générateur d'énergie électrique pour recharger les batteries du véhicule en mode thermique.

Une autre façon de tirer profit de la transmission peut être d'utiliser la machine électrique comme seule source d'énergie motrice jusqu'à un deuxième seuil de vitesse, au-delà duquel l'énergie motrice de la machine électrique et celle de la machine électrique se cumulent en mode hybride.

La machine électrique peut aussi intervenir pour assurer la synchronisation de la transmission pendant le découplage temporaire du moteur thermique intervenant les changements entre le premier et le deuxième rapport en mode hybride.

Enfin, à partir du mode thermique sur le rapport long, la machine électrique peut être couplée sur la transmission soit comme source motrice d'appoint à partir du mode thermique, soit comme générateur sur le mode thermique.

## Revendications

1. Transmission hybride pour véhicule automobile muni d'un moteur thermique et d'une machine électrique d'entraînement (7), comportant deux arbres primaires (1, 6) concentriques portant chacun au moins un pignon de descente (4, 8, 9) sur un arbre secondaire (10) relié aux roues du véhicule, dont un arbre primaire creux (6) relié à la machine électrique (7) et un arbre primaire plein (1) relié au moteur thermique,
**caractérisée en ce que** l'arbre primaire plein est connecté directement par l'intermédiaire d'un système de filtration (2) au volant d'inertie du moteur thermique et porte un pignon fou (4) pouvant être connecté directement à celui-ci par un premier moyen de couplage (5) entre les deux arbres primaires (1, 6) qui peut occuper au moins trois positions dans lesquelles :
- le moteur thermique est découplé de la chaîne cinématique reliant la machine électrique (7) aux roues (position 1),
- le pignon fou (4) est solidaire de l'arbre plein (1) et le moteur thermique entraîne les roues avec ou sans l'appoint de la machine électrique (position 2), et
- le moteur thermique et la machine électrique (7) sont couplés de manière à additionner en direction des roues, leurs couples respectifs (position 3),
**en ce que** les trois positions du premier moyen de couplage (5) et l'intervention combinée du deuxième moyen de couplage (13) lui assurent :
- un mode électrique en position 1,
- un mode thermique en position 2,
- des modes hybrides avec addition des couples, en position 2 et 3,
et **en ce qu'**elle dispose de un mode électrique sur deux rapports, d'un mode thermique sur un rapport, d'un mode hybride sur trois rapports

2. Transmission hybride selon la revendication 1, **caractérisée en ce qu'**elle présente deux pignons de descente (8, 9) du primaire creux (6) sur des pignons fous (12, 11) de l'arbre secondaire (10), et un deuxième moyen de couplage (13) de l'un ou l'autre des pignons fous (12, 11) de l'arbre secondaire, sur l'arbre secondaire (10).

3. Procédé de commande d'une transmission hybride conforme à l'une des revendications précédentes, **caractérisé en ce qu'** on utilise la machine électrique (7) comme seule source d'énergie motrice jusqu'à un seuil de vitesse, où on couple le moteur thermique aux roues, **caractérisé en ce qu'** on couple la machine électrique sur la transmission en source motrice à partir du mode thermique, ou en générateur sur le mode thermique.

4. Procédé de commande selon la revendication 3, **caractérisé en ce que** la machine électrique (7) est utilisée comme seule source d'énergie motrice jusqu'à un seuil de vitesse, au-delà duquel elle devient un générateur d'énergie électrique pour recharger les batteries du véhicule.

5. Procédé de commande selon la revendication 4, **caractérisé en ce que** la machine électrique (7) peut fonctionner comme source d'énergie motrice pour assurer la synchronisation de la transmission pendant le découplage temporaire du moteur thermique intervenant les changements entre le premier et le deuxième rapport.

6. Procédé de commande d'une transmission hybride selon la revendication 3 ou 4, **caractérisé en ce que** la machine électrique (7) est utilisée comme seule source d'énergie motrice jusqu'à un seuil de vitesse au-delà duquel l'énergie motrice de la machine électrique et celle de la machine électrique se cumulent.

7. Procédé de commande selon l'une des revendications 3 à 6, **caractérisé en ce que** le passage du deuxième rapport en mode électrique sur le troisième rapport en mode thermique comporte les étapes suivante :
- le moteur thermique est porté à son régime de synchronisation sans être lié à la chaîne cinématique (position 1),
- le moteur thermique est couplé à la chaîne cinématique (passage du premier moyen de couplage en position 2),
- la machine électrique est coupée, et le deuxième moyen de couplage est ouvert.

8. Procédé de commande selon l'une des revendications 3 à 7, **caractérisé en ce que** le passage du deuxième rapport en mode hybride sur le troisième rapport en mode thermique comporte les étapes suivantes :
- coupure du moteur thermique,
- découplage du moteur thermique (passage du premier moyen de couplage de la position 3 à la position 1),
- synchronisation du moteur thermique découplé sur le troisième rapport,
- couplage du moteur thermique (passage du premier moyen de couplage de la position 1 à la position 2),
- coupure de la machine électrique, et
- ouverture du deuxième moyen de couplage.

## Patentansprüche

1. Hybridgetriebe für ein Kraftfahrzeug mit einem Verbrennungsmotor und einer elektrischen Antriebsmaschine (7), umfassend zwei konzentrische Hauptwellen (1, 6), die jeweils mindestens ein Untersetzungsritzel (4, 8, 9) auf einer Nebenwelle (10) tragen, die mit den Rädern des Fahrzeugs verbunden ist, davon eine hohle Hauptwelle (6), die mit der elektrischen Maschine (7) verbunden ist, und eine volle Hauptwelle (1), die mit dem Verbrennungsmotor verbunden ist, **dadurch gekennzeichnet, dass** die volle Hauptwelle direkt über ein Filtersystem (2) mit dem Schwungrad des Verbrennungsmotors verbunden ist und ein freilaufendes Ritzel (4) trägt, das direkt mit diesem durch ein erstes Kopplungsmittel (5) zwischen den beiden Hauptwellen (1, 6) verbunden werden kann, das mindestens drei Positionen einnehmen kann, wobei:
- der Verbrennungsmotor von dem Antriebsstrang, der die elektrische Maschine (7) mit den Rädern verbindet, entkoppelt ist (Position 1),
- das freilaufende Ritzel (4) fest mit der vollen Welle (1) verbunden ist und der Verbrennungsmotor die Räder mit oder ohne Unterstützung der elektrischen Maschine antreibt (Position 2), und
- der Verbrennungsmotor und die elektrische Maschine (7) derart verbunden sind, dass ihre jeweiligen Drehmomente in Richtung der Räder addiert werden (Position 3),
dass die drei Positionen des ersten Kopplungsmittels (5) und der kombinierte Eingriff des zweiten Kopplungsmittels (13) ihm Folgendes gewährleisten:
- einen elektrischen Modus in Position 1,
- einen Verbrennungsmodus in Position 2,
- Hybridmodi mit Addition der Drehmomente in Position 2 und 3,
und dass es über einen elektrischen Modus in zwei Gängen, über einen Verbrennungsmodus in einem Gang, über einen Hybridmodus in drei Gängen verfügt.

2. Hybridgetriebe nach Anspruch 1, **dadurch gekennzeichnet, dass** es zwei Untersetzungsritzel (8, 9) des ersten Hohlraums (6) auf freilaufenden Ritzeln (12, 11) der Nebenwelle (10) und ein zweites Kopplungsmittel (13) des einen oder anderen freilaufenden Ritzels (12, 11) der Nebenwelle auf der Nebenwelle (10) aufweist.

3. Steuerverfahren eines Hybridgetriebes nach einem der vorhergehenden Ansprüche, **dadurch gekennzeichnet, dass** die elektrische Maschine (7) als alleinige Antriebsenergiequelle bis zu einem Geschwindigkeitsschwellenwert genutzt wird, bei dem der Verbrennungsmotor mit den Rädern gekoppelt wird, **dadurch gekennzeichnet, dass** die elektrische Maschine ausgehend von dem Verbrennungsmodus als Antriebsquelle oder im Verbrennungsmodus als Generator mit dem Getriebe gekoppelt wird.

4. Steuerverfahren nach Anspruch 3, **dadurch gekennzeichnet, dass** die elektrische Maschine (7) als alleinige Antriebsenergiequelle bis zu einem Geschwindigkeitsschwellenwert genutzt wird, ab welchem sie ein Generator für elektrische Energie wird, um die Batterien des Fahrzeugs aufzuladen.

5. Steuerverfahren nach Anspruch 4, **dadurch gekennzeichnet, dass** die elektrische Maschine (7) als Antriebsenergiequelle fungieren kann, um die Synchronisation des Getriebes während der zeitweisen Entkopplung des Verbrennungsmotors sicherzustellen, einschliessend die Wechsel zwischen dem ersten und dem zweiten Gang.

6. Steuerverfahren eines Hybridgetriebes nach Anspruch 3 oder 4, **dadurch gekennzeichnet, dass** die elektrische Maschine (7) als alleinige Antriebsenergiequelle bis zu einem Geschwindigkeitsschwellenwert genutzt wird, ab welchem sich die Antriebsenergie der elektrischen Maschine und die der elektrischen Maschine kumulieren.

7. Steuerverfahren nach einem der Ansprüche 3 bis 6, **dadurch gekennzeichnet, dass** das Wechseln von dem zweiten Gang im elektrischen Modus in den dritten Gang im Verbrennungsmodus die folgenden Schritte enthält:
- der Verbrennungsmotor wird auf seine Synchronisationsdrehzahl gebracht, ohne mit dem Antriebsstrang verbunden zu sein (Position 1),
- der Verbrennungsmotor ist mit dem Antriebsstrang verbunden (Wechseln des ersten Kopplungsmittels in Position 2),
- die elektrische Maschine wird abgeschaltet, und das zweite Kopplungsmittel wird geöffnet.

8. Steuerverfahren nach einem der Ansprüche 3 bis 7, **dadurch gekennzeichnet, dass** das Wechseln von dem zweiten Gang im Hybridmodus in den dritten Gang im Verbrennungsmodus die folgenden Schritte enthält:
- Abschalten des Verbrennungsmotors,
- Entkoppeln des Verbrennungsmotors (Wechseln des ersten Kopplungsmittels von der Position 3 in die Position 1),
- Synchronisation des entkoppelten Verbrennungsmotors im dritten Gang,
- Koppeln des Verbrennungsmotors (Wechseln des ersten Kopplungsmittels von der Position 1 in die Position 2),
- Abschalten der elektrischen Maschine, und
- Öffnen des zweiten Kopplungsmittels.

## Claims

1. Hybrid transmission for a motor vehicle equipped with a combustion engine and with an electric machine for drive (7), comprising two concentric primary shafts (1, 6) each bearing at least one gear (4, 8, 9) for transmitting to a secondary shaft (10) connected to the wheels of the vehicle, namely a hollow primary shaft (6) connected to the electric machine (7) and a solid primary shaft (1) connected to the combustion engine, **characterized in that** the solid primary shaft (1) is connected directly via a filtering system (2) to the flywheel of the combustion engine and bears an idler gear (4) which can be connected directly thereto by a first means (5) of coupling between the two primary shafts (1, 6) which is able to occupy at least three positions in which:
- the combustion engine is uncoupled from the drivetrain that connects the electric machine (7) to the wheels (position 1),
- the idler gear (4) is connected to the solid shaft (1) and the combustion engine drives the wheels with or without top-up from the electric machine (position 2), and
- the combustion engine and the electric machine (7) are coupled in such a way that their respective torques bound for the wheels are combined (position 3), **in that** the three positions of the first coupling means (5) and the combined intervention of the second coupling means (13) give it:
- an electric mode in position 1,
- a combustion mode in position 2,
- hybrid modes in which the torques are combined, in positions 2 and 3,
and **in that** it has an electric mode on two gear ratios, a combustion mode on one gear ratio, a hybrid mode on three gear ratios.

2. Hybrid transmission according to Claim 1, **characterized in that** it has two transmission gears (8, 9) transmitting from the hollow primary (6) to idler gears (12, 11) of the secondary shaft (10), and a second means (13) of coupling one or other of the idler gears (12, 11) of the secondary shaft to the secondary shaft (10) .

3. Method of controlling the hybrid transmission according to one of the preceding claims, **characterized in that** use is made of the electric machine (7) as the sole source of motive power up to a speed threshold at which the combustion engine is coupled to the wheels, **characterized in that** the electric machine is coupled to the transmission as a source of motive power from the thermal mode, or as a generator to the thermal mode.

4. Control method according to Claim 3, **characterized in that** the electric machine (7) is used as the sole source of motive power up to a speed threshold beyond which it becomes an electric power generator for recharging the batteries of the vehicle.

5. Control method according to Claim 4, **characterized in that** the electric machine (7) can operate as a source of motive power to synchronize the transmission during the temporary uncoupling of the combustion engine involving the changes between the first and the second gear ratio.

6. Method for controlling the hybrid transmission according to Claim 3 or 4, **characterized in that** the electric machine (7) is used as the sole source of motive power up to a speed threshold beyond which the motive power of the electric machine and that of the electric machine are combined.

7. Control method according to one of Claims 3 to 6, caractrized in that the shift from the second gear ratio in the electric mode to the third gear ratio in combustion mode involves the following steps:
- the combustion engine is brought to its synchronous speed without being connected to the drivetrain (position 1),
- the combustion engine is coupled to the drivetrain (shifting of the first coupling means into position 2),
- the electric machine is switched off and the second coupling means is opened.

8. Control method according to one of Claims 3 to 7, **characterized in that** the shift from the second gear ratio in hybrid mode to the third gear ratio in combustion mode involves the following steps:
- switching off the combustion engine,
- uncoupling the combustion engine (shifting of the first coupling means from position 3 to position 1),
- synchronizing the uncoupled combustion engine with the third gear ratio,
- coupling the combustion engine (shifting of the first coupling means from position 1 into position 2),
- switching off the electric machine, and
- opening the second coupling means.
